(19) Europäisches Patentamt
European Patent Office
Office européen des brevets

(11) **EP 2 730 149 B1**

(12) **EUROPEAN PATENT SPECIFICATION**

(45) Date of publication and mention of the grant of the patent:
**06.09.2017 Bulletin 2017/36**

(21) Application number: **12733123.9**

(22) Date of filing: **06.07.2012**

(51) Int Cl.:
***H05B 41/285*** *(2006.01)* ***H02M 1/38*** *(2007.01)*

(86) International application number:
**PCT/EP2012/063230**

(87) International publication number:
**WO 2013/004810 (10.01.2013 Gazette 2013/02)**

(54) **ELECTRONIC BALLAST HAVING ADAPTIVE DEAD TIME CONTROL, FOR A LAMP**

ELEKTRONISCHES VORSCHALTGERÄT MIT ADAPTIVER TOTZEITSTEUERUNG FÜR EINE LAMPE

BALLAST ÉLECTRONIQUE AYANT UNE COMMANDE ADAPTATIVE DE TEMPS MORT, POUR UNE LAMPE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.07.2011 GB 201111574**

(43) Date of publication of application:
**14.05.2014 Bulletin 2014/20**

(73) Proprietor: **Tridonic GmbH & Co. KG**
**6851 Dornbirn (AT)**

(72) Inventors:
- **KELLY, Jamie**
  **North Shields**
  **Tyne&Wear NE29 8AH (GB)**
- **MAKWANA, Deepak**
  **Newcastle**
  **Upon Tyne NE4 8UB (GB)**
- **MCDERMOTT, Kevin**
  **Heaton**
  **Newcastle NE6 5TA (GB)**
- **DALBY, Paul**
  **Middlesbrough**
  **Cleveland TS5 7LP (GB)**
- **BELL, Wayne**
  **Broompark**
  **Durham DH7 7RS (GB)**

(74) Representative: **Barth, Alexander**
**Tridonic GmbH & Co KG**
**Färbergasse 15**
**6851 Dornbirn (AT)**

(56) References cited:
**EP-A1- 1 770 862**
**WO-A1-01/78467**
**US-A1- 2009 027 021**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 730 149 B1

## Description

### TECHNICAL FIELD

The present invention relates to an electronic ballast for a lamp, such as a gas discharge lamp, preferably for a fluorescent lamp, and to a corresponding method.

### BACKGROUND TO THE INVENTION

The use of electronic ballasts for operating gas discharge lamps is preferred over the use of conventional ballasts, due to lower losses and improved lamp efficiency, leading to significant energy savings. The input of a typical electronic ballast is formed by means of a high frequency filter connected to the voltage supply mains, which high frequency filter is connected with a rectifier circuit. The rectified supply voltage from the rectifier circuit is fed to a smoothing circuit for the generation of an intermediate circuit voltage, and finally an inverter fed with the intermediate circuit voltage generates a high frequency a.c. voltage, which is applied to the load circuit with the gas discharge lamp connected thereto. The operation with high frequency a.c. voltage has as a consequence a reduction of electrode losses and an increase of the light yield. Further, there arises the possibility of igniting the lamp in a controlled and power conserving manner.

For igniting the gas discharge lamp normally its electrodes are initially pre-heated with an increased frequency of the inverter. At the end of this pre-heating period the frequency generated by the inverter is then reduced, so that it approaches the resonance frequency of the load circuit, which is primarily determined by a series resonance circuit arranged in the load circuit, and as a consequence thereof the voltage applied to the lamp increases. At a certain time point during the reduction of the frequency there is finally effected the ignition of the gas discharge lamp.

For operation of the half bridge, a control circuit detects, for monitoring the load circuit current, preferably the voltage dropping over a resistance arranged at the foot of the half-bridge of the inverter, and compares this with reference voltages. The monitoring of the current is then effected during the switch-on phase of the lower switch of the half-bridge. Beyond this, after the switching off of one of the two switches and before the following switching on of the other switch there is provided a predetermined delay time ("dead time"), in order to exclude a short-circuiting of the inverter. The switches are preferably MOS field effect transistors, the gates of which are controlled by the control circuit by means of pulse modulated signals with varying frequency and / or pulse width.

The dead time is conventionally a fixed period. Problems can occur with the half bridge if the load varies. This can be due to different loads or different modes of operation when operating a particular load. The isolated gate drive, used to drive the upper switch of the half-bridge, can also be a limitation. Such problems have led to the adoption of an adaptive (variable) dead time.

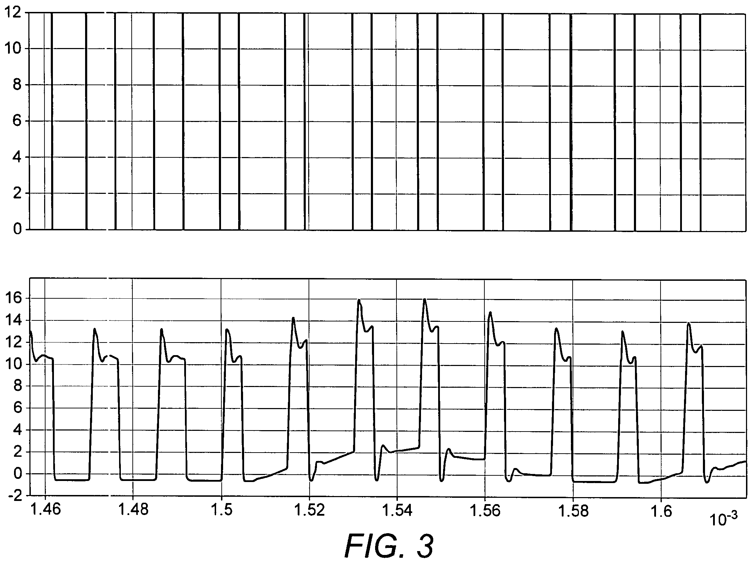

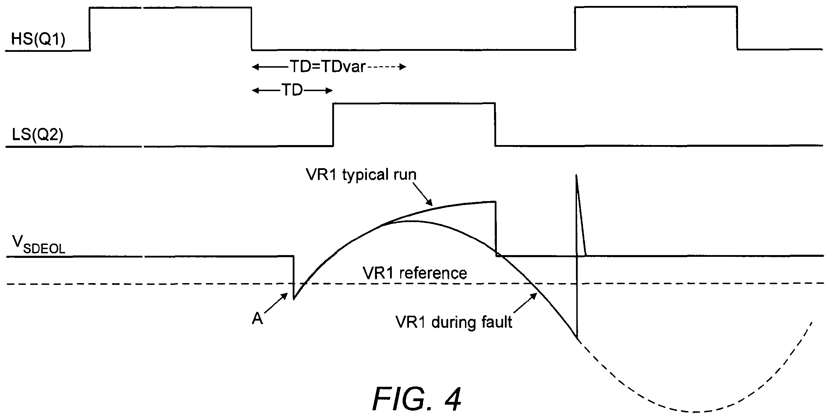

The patent document US-A1-2009/027021 discloses a synchronous converter comprising a synchronous-buck topology where in comparison with a conventional buck converter the freewheeling diode has been replaced by a second actively controlled switch (Q2). As it can be seen from Fig. 3 and Fig. 4 the switch-on duration of switch Q1 and switch Q2 is not equal. Within this synchronous-buck the voltage 114 at the intersection point of both switches Q1, Q2 is monitored to detect the voltage a this point during switching. A dead-time adjustment circuit (130) adjusts the dead-time of the two switches (Q1, Q2) by adapting the control signal to the second switch (Q2). It is an object of an embodiment of this invention to provide improvements in adaptive dead time.

### SUMMARY OF THE INVENTION

According to a first aspect of the present invention, there is provided an electronic ballast for a lamp, such as a gas discharge lamp, preferably for a fluorescent lamp, having an inverter, connected with a d.c. voltage source, and a load circuit, which has the lamp and a series resonance circuit, connected to the inverter, wherein the inverter is formed by means of a high side switch and a low side switch arranged in a half-bridge arrangement, which switches are controllable by control means, wherein after the switching off of one of the two switches and before the following switching on of the other switch there is provided a delay time ("dead time"), characterised in that the control means is operable to detect a negative current in a body diode of the low side switch and for varying the dead time in dependence thereon, wherein the control circuit, for monitoring the current, detects the voltage (VSDEOd) drop across a resistance (R1) arranged at the foot at the half-bridge. An embodiment of the invention will be described by way of example below. In the embodiment the control means is implemented as a control circuit, and may for example be arranged on an ASIC. The control means may also be implemented by software run on a computer, for example.

In the embodiment the control means detects the negative current in the body diode of the low side switch and varies the dead time between a fixed value (a minimum value) and a maximum value in dependence upon this detection.

In the embodiment the control means determines the time period between the high side switch being turned off and the detection of the negative current in the body diode of the low side switch. In the embodiment the control means sets the dead time to the fixed (minimum) value if the time period is less than or equal to a first duration. In the embodiment the control means ends the dead time when the time period ends if the time period is greater than the first duration but less than a second duration. That is, once the time period has exceeded the first duration, the control means will end the dead time simultaneously with the detection of the negative current in the body diode of the low side switch. However, advantageously, in the embodiment a maximum deadline is effectively set by the control means suspending switching of the high side switch and the low side switch if the negative current of the body diode of the low side switch is not detected within the second duration (a maximum time limit). That is, the half-bridge is shut down if no negative current in the body diode of the low side switch is detected within the maximum time limit. Limiting the maximum dead time avoids possible disturbance caused by large changes in the dead time.

In the embodiment the control means, for monitoring the current in the body diode of the low side switch, detects the voltage drop across a resistor arranged at the foot of the half-bridge (in series between the source of the low side switch and ground).

In the embodiment the control means detects a negative current in the body diode of the low side switch in the dead time period after the low side switch is turned off and suspends switching of the high side switch in response thereto. This checks that, as the low side switch turns off, the current in the low side switch is not negative. If the current is negative, then the high side switch is not switched on by the control means.

The invention is not limited to electronic ballasts for gas discharge lamps but also for electronic ballasts for light emitting diodes. It can be applied to non-isolated resonant circuits as well as to isolated resonant circuits.

According to a second aspect of the present invention, there is provided a corresponding method.

## BRIEF DESCRIPTION OF THE DRAWINGS

For a better understanding of the present invention an embodiment will now be described by way of example, with reference to the accompanying drawings, in which:

Figure 1 shows a switching arrangement for a ballast;

Figure 2 is a waveform which shows how a resonance occurs that can result in no possibility of a ZVS signal;

Figure 3 shows a simulation of how transitions from one dead time to another can cause disturbance; and

Figure 4 shows the use of ZVS to determine dead time depending the operation mode of the ballast.

## DETAILED DESCRIPTION OF EMBODIMENT OF THE INVENTION

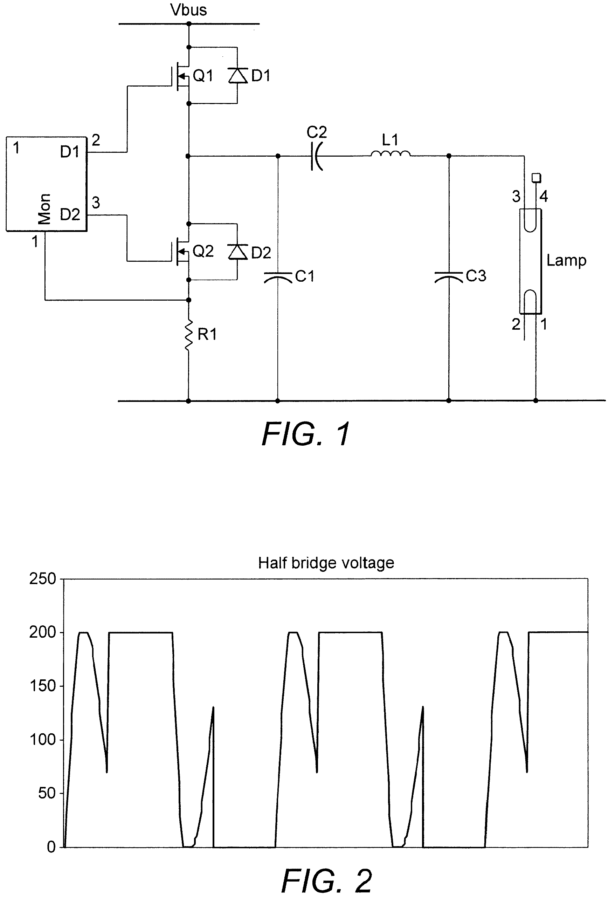

The main components of are illustrated in the circuitry diagram in Figure 1. The further elements of the ballast arranged upstream of the inverter - for example the rectifier and smoothing circuit - are already well known and thus are not explained in more detail below.

The inverter is formed by means of a half-bridge of two electronic switches Q1 and Q2 connected in series. These switches Q1 and Q2 may be formed for example by means of two MOS field effect transistors. The switches have respective body diodes D1 and D2 associated therewith. The foot of the half-bridge is connected with ground via a shunt resistance R1, whilst at the input of the half-bridge the d.c. voltage Vbus is applied, which can for example be generated by shaping the mains voltage by means of a combination of radio frequency suppressor and rectifier. Alternatively to this there can, however, also be applied to the half-bridge any other d.c. voltage source.

At the common node point of the two switches Q1 and Q2, there is preferably connected the load circuit containing the gas discharge lamp LAMP, which is preferably a fluorescent lamp. This comprises of a series resonance circuit, which is made up of a choke Ll and a resonance capacitance C3.

The control of the two switches Q1, Q2 of the inverter is effected by means of a control circuit 1, which passes control signals to the gates of the two field effect transistors Q1 and Q2. The high side switch Q1 is driven by HS (high side) drive HSOUT (D1) of the control circuit 1. The low side switch Q2 is driven by LS (low side) drive LSOUT (D2) of the control circuit 1.

A switching period begins with a switching on or closing of the upper switch Q1 of the half-bridge for a certain switching-on time ton. At the end of this switch-on time ton the switch Q1 is again opened, and alternatingly the switch Q2 closed. Between the opening of the switch Q1 and the following closing of the switch Q2 a dead time TD is waited out, in order in any event to avoid a simultaneous closing of the two switches Q1, Q2 and therewith a short-circuiting of the inverter. Also the second switch Q2 is closed for the switch-on time ton and thereafter again opened. After a further waiting out of the dead time TD the upper switch Q1 is again closed, with which a complete switching period is ended.

The overall time Tp of a period is thus:

$$Tp = 2.(ton + TD)$$

The frequency of the inverter is correspondingly calculated as:

$$f = 1/Tp = 1 / [2. (ton + TD)]$$

During a start phase of the ballast, initially the electrodes of the lamp LAMP are pre-heated, which is effected in that there is applied to the load circuit an a.c.

voltage having a frequency which lies significantly above the resonance frequency of the load circuit. The voltage yielded thereby is then too low to be able to bring about an ignition of the lamp LAMP.

At the end of the pre-heating time, the ignition of the lamp LAMP is initiated, which is effected in that the switch on time ton for the two switches Q1, Q2 of the inverter is stepwise increased and correspondingly the operating frequency of the inverter is reduced. The frequency then approaches ever closer the resonance frequency of the load circuit, until the voltage yielded thereby is so great that it brings about an ignition of the gas discharge lamp LAMP.

After igniting the fluorescent lamp LAMP electrically behaves essentially as an ohmic resistance, so that the lamp voltage after ignition falls, which is maintained in the run mode by a normal operating frequency of the switches Q1 and Q2.

Efficient switching from Q1 to Q2 requires sufficient forward current to be present in Q1 when it switches off. If sufficient, and if it is inductive, this current will discharge C1 from the positive rail to the negative rail in time for Q2 to switch on at the end of the dead time period. Zero voltage switching (ZVS) detection looks for a negative current in the body diode D2 of Q2. This could not occur unless the voltage across Q2 was zero and therefore this gives a very reliable detection method.

The only information available is the current in Q2 by the control circuit 1 detecting the voltage drop $V_{SDEOL}$ across the shunt resistance R1. This is detected by the pin "Mon" of the control circuit 1. This voltage across Resistor R1, also called VR1, will be compared with a VR1-reference voltage by the means of the control circuit 1. ZVS detection can thus verify the transition from Q1 to Q2 is correct. Given that the current in Q1 cannot realistically be measured, the transition from Q2 to Q1 cannot be verified.

Two techniques may be used to provide information on the switching. These techniques are limited to what can be determined from measuring the currents flowing in Q2. Any other current measurements would require too much complexity. The first technique is CCD (Capacitive Current Detection). This checks that the current in Q2 is larger than a certain threshold as Q2 switches off. This helps to ensure that the transition from Q2 conducting to Q1 conducting will not involve hard switching. The second technique is ZVS, which measures the current flowing in the body diode D2 of Q2 soon after Q1 is switched off. If a negative current (ie a current flowing in the body diode) flows in Q2, it shows that Q2 must have become reverse biased. It is therefore possible to switch Q2 on without any switching losses. Another consideration is that the load is symmetrical in normal operation so the switching of Q1 and Q2 should be symmetrical. With this in mind, the dead time that is applied to the transition from Q1 to Q2 should also be applied to the transition between Q2 and Q1. This symmetric dead time is built into the logic of control circuit 1.

Figure 4 shows the ZVS technique. The voltage VR1 across the resistor R1 is measured at pin "Mon" of the control circuit 1, and is compared by the control circuit 1 to a reference voltage VR1-reference when the voltage is determined to be below VR1-reference, ZVS is considered to be TRUE by the control circuit 1 and a ZVS signal is generated.

When switching from Q1 to Q2, the presence of a ZVS signal is latched (determined) by the control circuit 1 and Q2 will be switched on after a fixed dead time TD. However, if the ZVS signal was not latched (determined) by the control circuit 1 prior to this fixed dead time TD, Q2 will be switched on once ZVS is detected. However, if a maximum dead time TD + TDvar is exceeded, Q2 will not be switched on. In this way the dead time adapts between the fixed dead time TD and the maximum dead time TD + TDvar, dependent on ZVS. The adaption of the dead time may also vary with the operation mode of the ballast (i.e. ignition mode or normal run mode).

In other words, at the end of the fixed dead time TD, the control circuit determines whether ZVS was detected during the fixed dead time TD. If ZVS was detected, then Q2 will switch on at the end of the fixed dead time TD. On the other hand, if ZVS was not detected during the fixed dead time TD, then the control circuit monitors for ZVS until the end of the maximum dead time TD + TDvar. If ZVS is detected between the end of the fixed dead time TD and the maximum dead time TD + TDvar, Q2 will be switched on immediately that ZVS is detected. After the end of the maximum dead time TD + TDvar, the control circuit 1 maintains HSOUT (D1) and LSOUT (D2) FALSE so that Q1 and Q2 remain off, and a ZVS event counter is activated. When the counter reaches a maximum value, the control circuit 1 is shut down.

In Figure 4, VR1 becomes less than or equal to VR1-reference at point A. As this is within the fixed dead time TD, the control circuit does not switch Q2 on (make LSOUT (D2) TRUE until time TD has passed.

A couple of factors affect the choice of the maximum dead time TD + TDvar.

The waveform of figure 2 shows how a resonance occurs that can result in no possibility of a ZVS signal. This resonance is primarily due to C1 and L1. There is no point in waiting any longer than half the period of this resonance. Another factor is that asymmetry in the isolated gate drive can cause transients that may not fully switch Q1 off.

Transitions from one dead time to another can cause the type of disturbance shown in figure 3. This is from a simulation and shows the on pulse width for Q1 reducing as a step change. Minimising the maximum dead time TD + TDvar will help to avoid this situation by limiting the amount of step change in pulse width that can occur.

A further measurement that may be incorporated is to check that as Q2 switches off, the current in Q2 is not negative. If it is Q1 will not be switched on by the control circuit. This may be implemented by the control circuit 1 determining if the voltage VR1 across the resistor R1 is greater than the reference voltage VR1-reference in the dead time period after Q2 being switched off (for example immediately before the control circuit is scheduled to turn Q1 on). If the control circuit determines that the voltage VR1 across the resistor R1 is greater than the reference voltage, then the control circuit turns Q1 on at the scheduled time (when the dead time ends). On the other hand, if the control circuit determines that the voltage VR1 across the resistor R1 is less than or equal to the reference voltage, then Q1 is not turned on.

As mentioned above the invention is not limited to electronic ballasts for gas discharge lamps but also for electronic ballasts for light emitting diodes. It can be applied to non-isolated resonant circuits as well as to isolated resonant circuits, e.g. to LLC resonant circuits or LCL resonant circuits.

**Claims**

1. Electronic ballast for a lamp, such as a gas discharge lamp, preferably for a fluorescent lamp (LAMP), having an inverter, connectable with a d.c. voltage source (Vbus), and a load circuit, which has the lamp (LAMP) and a series resonance circuit, connected to the inverter, wherein the inverter is formed by means of a high side switch and a low side switch (Q1, Q2) arranged in a half-bridge arrangement, which switches are controllable by control means (1), wherein after the switching off of one of the two switches and before the following switching on of the other switch there is provided a delay time ("dead time"), wherein the control means (1) is operable to detect a negative current in a body diode (D2) of the low side switch (Q2) and to vary the dead time in dependence thereon, **characterised in that** the control circuit (1), for monitoring the current, is adapted to detect the voltage ($V_{SDEOL}$) drop across a resistance (R1) arranged at the foot at the half-bridge.

2. The ballast of claim 1, wherein the control means (1) is operable to detect the negative current in the body diode (D2) of the low side switch (Q2) and to vary the dead time between a fixed value (TD) and a maximum value (TD+TDvar) in dependence thereon.

3. The ballast of claim 2, wherein the control means (1) is operable to determine the time period between the high side switch (Q1) turning off and the detection of the negative current in the body diode of the low side switch (Q2).

4. The ballast of claim 3, wherein the control means (1) is operable to set the dead time at the fixed value (TD) if the time period is less or equal to than a first duration.

5. The ballast of claim 4, wherein the control means (1) is operable to end the dead time when the time period ends if the time period is greater than the first duration but less than a second duration.

6. The ballast of claim 5, wherein the control means (1) is operable to suspend switching of the high side switch (Q1) and the low side switch (Q2) if the negative current in the body diode of the low side switch is not detected within a maximum time limit.

7. The ballast of any one of claims 1 to 6, wherein the control means (1) is operable to detect a negative current in the body diode of the low side switch (Q2) in the dead time period after the low side switch (Q2) is turned off and to suspend switching of the high side switch (Q1) in response thereto.

8. A method of operating an electronic ballast for a lamp, such as a gas discharge lamp, preferably for a fluorescent lamp (LAMP), which ballast has an inverter, connectable with a d.c. voltage source (Vbus), and a load circuit, which has the lamp (LAMP) and a series resonance circuit, connected to the inverter, wherein the inverter is formed by means of a high side switch and a low side switch (Q1, Q2) arranged in a half-bridge arrangement, the method including controlling the switches (Q1, Q2) such that after the switching off of one of the two switches and before the following switching on of the other switch there is provided a delay time ("dead time"), further comprising detecting a negative current in a body diode (D2) of the low side switch (Q2) and varying the dead time in dependence thereon, **characterised in that** the current is monitored by detecting the voltage ($V_{SDEOL}$) drop across a resistance (R1) arranged at the foot at the half-bridge.

9. The method of claim 8, including detecting negative current in the body diode (D2) of the low side switch (Q2) and varying the dead time between a fixed value (TD) and a maximum value (TD+TDvar) in dependence thereon.

10. The method of claim 9, including determining the time period between the high side switch (Q1) turning off and the detection of the negative current in the body diode of the low side switch (Q2).

11. The method of claim 10, including setting the dead time at the fixed value (TD) if the time period is less than or equal to a first duration.

12. The method of claim 11, including ending the dead time when the time period ends if the time period is greater than the first duration but less than a second duration.

**13.** The method of claim 12, wherein including suspending switching of the high side switch (Q1) and the low side switch (Q2) if the negative current in the body diode of the low side switch is not detected within a maximum time limit.

**14.** The method of any one of claims 8 to 13, including detecting a negative current in the body diode of the low side switch (Q2) in the dead time period after the low side switch (Q2) is turned off and to suspend switching of the high side switch (Q1) in response thereto.

**Patentansprüche**

**1.** Elektronisches Vorschaltgerät für eine Lampe, wie beispielsweise eine Gasentladungslampe, vorzugsweise für eine Leuchtstofflampe (LAMP), das einen Wechselrichter aufweist, der mit einer Gleichspannungsquelle (Vbus) verbunden werden kann, und einen Lastkreis, der die Lampe (LAMP) und einen mit dem Wechselrichter verbundenen Serienresonanzkreis aufweist, wobei der Wechselrichter mit Hilfe eines High-Side-Schalters und eines Low-Side-Schalters (Q1, Q2) gebildet ist, die in einer Halbbrückenanordnung angeordnet sind, wobei die Schalter durch Steuermittel (1) steuerbar sind, wobei nach dem Ausschalten von einem der zwei Schalter und vor dem folgenden Einschalten des anderen Schalters eine Verzögerungszeit ("Totzeit") bereitgestellt ist, wobei das Steuermittel (1) ausgelegt ist, einen negativen Strom in einer Body-Diode (D2) des Low-Side-Schalters (Q2) zu erkennen und die Totzeit abhängig davon zu variieren,
**dadurch gekennzeichnet, dass**
der Steuerkreis (1) zum Überwachen des Stroms dafür eingerichtet ist, den Abfall der Spannung ($V_{SDEOL}$) an einem Widerstand (R1) zu erkennen, der am Fuß an der Halbbrücke angeordnet ist.

**2.** Vorschaltgerät nach Anspruch 1, wobei das Steuermittel (1) ausgelegt ist, einen negativen Strom in der Body-Diode (D2) des Low-Side-Schalters (Q2) zu erkennen und die Totzeit abhängig davon zwischen einem festen Wert (TD) und einem maximalen Wert (TD+TDvar) zu variieren.

**3.** Vorschaltgerät nach Anspruch 2, wobei das Steuermittel (1) ausgelegt ist, die Zeitspanne zwischen dem Ausschalten des High-Side-Schalters (Q1) und dem Erkennen des negativen Stroms in der Body-Diode (D2) des Low-Side-Schalters (Q2) zu bestimmen.

**4.** Vorschaltgerät nach Anspruch 3, wobei das Steuermittel (1) ausgelegt ist, die Totzeit auf den festen Wert (TD) einzustellen, wenn die Zeitspanne kleiner oder gleich einer ersten Dauer ist.

**5.** Vorschaltgerät nach Anspruch 4, wobei das Steuermittel (1) ausgelegt ist, die Totzeit bei Ablauf der Zeitspanne zu beenden, wenn die Zeitspanne größer als die erste Dauer, aber kleiner als eine zweite Dauer ist.

**6.** Vorschaltgerät nach Anspruch 5, wobei das Steuermittel (1) ausgelegt ist, das Schalten des High-Side-Schalters (Q1) und des Low-Side-Schalters (Q2) auszusetzen, wenn der negative Strom in der Body-Diode (D2) des Low-Side-Schalters nicht innerhalb einer maximalen Zeitbegrenzung erkannt wird.

**7.** Vorschaltgerät nach einem der Ansprüche 1 bis 6, wobei das Steuermittel (1) ausgelegt ist, einen negativen Strom in der Body-Diode des Low-Side-Schalters (Q2) in der Totzeitperiode zu erkennen, nachdem der Low-Side-Schalters (Q2) ausgeschaltet wurde, und das Schalten des High-Side-Schalters (Q1) in Reaktion darauf auszusetzen.

**8.** Verfahren zum Betreiben eines elektronischen Vorschaltgerätes für eine Lampe, wie beispielsweise eine Gasentladungslampe, vorzugsweise für eine Leuchtstofflampe (LAMP), wobei das Vorschaltgerät einen Wechselrichter aufweist, der mit einer Gleichspannungsquelle (Vbus) verbunden werden kann, und einen Lastkreis, der die Lampe (LAMP) und einen mit dem Wechselrichter verbundenen Serienresonanzkreis aufweist, wobei der Wechselrichter mit Hilfe eines High-Side-Schalters und eines Low-Side-Schalters (Q1, Q2) gebildet ist, die in einer Halbbrückenanordnung angeordnet sind, wobei das Verfahren das Steuern der Schalter (Q1, Q2) derart umfasst, dass nach dem Ausschalten von einem der zwei Schalter und vor dem folgenden Einschalten des anderen Schalters eine Verzögerungszeit ("Totzeit") bereitgestellt wird,
ferner Folgendes umfassend:

Erkennen eines negativen Stroms in einer Body-Diode (D2) des Low-Side-Schalters (Q2) und Variieren der Totzeit abhängig davon,
**dadurch gekennzeichnet, dass**
der Strom durch Erkennen des Abfalls der Spannung ($V_{SDEOL}$) an einem Widerstand (R1), der am Fuß an der Halbbrücke angeordnet ist, überwacht wird.

**9.** Verfahren nach Anspruch 8, aufweisend das Erkennen eines negativen Stroms in der Body-Diode (D2) des Low-Side-Schalters (Q2) und das Variieren der Totzeit zwischen einem festen Wert (TD) und einem maximalen Wert (TD+TDvar) abhängig davon.

**10.** Verfahren nach Anspruch 9, aufweisend das Bestimmen der Zeitspanne zwischen dem Ausschalten des High-Side-Schalters (Q1) und dem Erkennen des negativen Stroms in der Body-Diode des Low-Side-Schalters (Q2).

**11.** Verfahren nach Anspruch 10, aufweisend das Einstellen der Totzeit auf den festen Wert (TD), wenn die Zeitspanne kleiner oder gleich einer ersten Dauer ist.

**12.** Verfahren nach Anspruch 11, aufweisend das Beenden der Totzeit bei Ablauf der Zeitspanne, wenn die Zeitspanne größer als die erste Dauer, aber kleiner als eine zweite Dauer ist.

**13.** Verfahren nach Anspruch 12, aufweisend das Aussetzen des Schaltens des High-Side-Schalters (Q1) und des Low-Side-Schalters (Q2), wenn der negative Strom in der Body-Diode des Low-Side-Schalters nicht innerhalb einer maximalen Zeitbegrenzung erkannt wird.

**14.** Verfahren nach einem der Ansprüche 8 bis 13, aufweisend das Erkennen eines negativen Stroms in der Body-Diode des Low-Side-Schalters (Q2) in der Totzeitperiode, nachdem der Low-Side-Schalters (Q2) ausgeschaltet wurde, und das Aussetzen des Schaltens des High-Side-Schalters (Q1) in Reaktion darauf.

**Revendications**

**1.** Ballast électronique pour une lampe, telle qu'une lampe à décharge gazeuse, de préférence pour une lampe fluorescente (LAMPE), ayant un inverseur connectable avec une source de tension c.c. (Vbus), et un circuit de charge, qui possède la lampe (LAMPE) et un circuit de résonance en série, connecté à l'inverseur, dans lequel l'inverseur est formé au moyen d'un commutateur haute tension et d'un commutateur basse tension (Q1, Q2) agencés en un agencement de demi-pont, lesquels commutateurs peuvent être commandés par des moyens de commande (1), dans lequel après la désactivation d'un des deux commutateurs et avant l'activation suivante de l'autre commutateur, il est prévu un délai (« temps mort »), dans lequel les moyens de commande (1) sont utilisables pour détecter un courant négatif dans une diode de corps (D2) du commutateur basse tension (Q2) et pour faire varier le temps mort en fonction de celui-ci, **caractérisé en ce que**
le circuit de commande (1), pour surveiller le courant, est adapté pour détecter la chute de tension ($V_{SDEOL}$) de part et d'autre d'une résistance (R1) agencée au niveau du pied au niveau du demi-pont.

**2.** Ballast selon la revendication 1, dans lequel les moyens de commande (1) sont utilisables pour détecter le courant négatif dans la diode de corps (D2) du commutateur basse tension (Q2) et pour faire varier le temps mort entre une valeur fixe (TD) et une valeur maximale (TD+TDvar) en fonction de celui-ci.

**3.** Ballast selon la revendication 2, dans lequel les moyens de commande (1) sont utilisables pour déterminer la période de temps entre la désactivation du commutateur haute tension (Q1) et la détection du courant négatif dans la diode de corps du commutateur basse tension (Q2).

**4.** Ballast selon la revendication 3, dans lequel les moyens de commande (1) sont utilisables pour définir le temps mort à la valeur fixe (TD) si la période de temps est inférieure ou égale à une première durée.

**5.** Ballast selon la revendication 4, dans lequel les moyens de commande (1) sont utilisables pour terminer le temps mort lorsque la période de temps se termine si la période de temps est supérieure à la première durée mais inférieure à une seconde durée.

**6.** Ballast selon la revendication 5, dans lequel les moyens de commande (1) sont utilisables pour suspendre la commutation du commutateur haute tension (Q1) et du commutateur basse tension (Q2) si le courant négatif dans la diode de corps du commutateur basse tension n'est pas détecté dans une limite de temps maximale.

**7.** Ballast selon l'une quelconque des revendications 1 à 6, dans lequel les moyens de commande (1) sont utilisables pour détecter un courant négatif dans la diode de corps du commutateur basse tension (Q2) dans la période de temps mort une fois que le commutateur basse tension (Q2) est désactivé et pour suspendre la commutation du commutateur haute tension (Q1) en réponse à celui-ci.

**8.** Procédé de fonctionnement d'un ballast électronique pour une lampe, telle qu'une lampe à décharge gazeuse, de préférence pour une lampe fluorescente (LAMPE), lequel ballast possède un inverseur, connectable avec une source de tension c.c. (Vbus), et un circuit de charge, qui possède la lampe (LAMPE) et un circuit de résonance en série, connecté à l'inverseur, dans lequel l'inverseur est formé au moyen d'un commutateur haute tension et d'un commutateur basse tension (Q1, Q2) agencés en un agencement de demi-pont, le procédé incluant le contrôle des commutateurs (Q1, Q2) de telle sorte qu'après la désactivation d'un des deux commutateurs et avant l'activation suivante de l'autre commutateur, il est prévu un délai (« temps mort »), comprenant en outre
la détection d'un courant négatif dans une diode de corps (D2) du commutateur basse tension (Q2) et la variation du temps mort en fonction de celui-ci,
**caractérisé en ce que**
le courant est surveillé en détectant la chute de tension ($V_{SDEOL}$) de part et d'autre d'une résistance (R1) agencée au niveau du pied au niveau du demipont.

**9.** Procédé selon la revendication 8, incluant la détection de courant négatif dans la diode de corps (D2) du commutateur basse tension (Q2) et la variation du temps mort entre une valeur fixe (TD) et une valeur maximale (TD+TDvar) en fonction de celui-ci.

**10.** Procédé selon la revendication 9, incluant la détermination de la période de temps entre la désactivation du commutateur haute tension (Q1) et la détection du courant négatif dans la diode de corps du commutateur basse tension (Q2).

**11.** Procédé selon la revendication 10, incluant la définition du temps mort à la valeur fixe (TD) si la période de temps est inférieure ou égale à une première durée.

**12.** Procédé selon la revendication 11, incluant la cessation du temps mort lorsque la période de temps se termine si la période de temps est supérieure à la première durée, mais inférieure à une seconde durée.

**13.** Procédé selon la revendication 12, incluant la suspension de la commutation du commutateur haute tension (Q1) et du commutateur basse tension (Q2) si le courant négatif dans la diode de corps du commutateur basse tension n'est pas détecté dans une limite de temps maximale.

**14.** Procédé selon l'une quelconque des revendications 8 à 13, incluant la détection d'un courant négatif dans la diode de corps du commutateur basse tension (Q2) dans la période de temps mort après désactivation du commutateur basse tension (Q2) et la suspension de la commutation du commutateur haute tension (Q1) en réponse à celui-ci.

Vbus
Q1
D1
Q2
D2
1
D1
2
3
Mon
D2
1
C2
L1
C1
C3
R1
3
4
Lamp
2
1

*FIG. 1*

Half bridge voltage
250
200
150
100
50
0

*FIG. 2*

12
10
8
6
4
2
0
16
14
12
10
8
6
4
2
0
-2
1.46
1.48
1.5
1.52
1.54
1.56
1.58
1.6
$10^{-3}$
*FIG. 3*

HS(Q1)
LS(Q2)
V_SDEOL
TD=TDvar
TD
VR1 typical run
VR1 reference
VR1 during fault
A

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2009027021 A1